# EUROPEAN PATENT APPLICATION

(11) **EP 4 331 865 A1**
(43) Date of publication of application: **06.03.2024**
(21) Application number: 21939374.1
(22) Date of filing: 28.10.2021
(51) Int. Cl.: B60C 5/00

(54) **PNEUMATIC TIRE**

(30) Priority: 28.04.2021 JP 2021076612
(71) Applicant: BRIDGESTONE CORPORATION, Chuo-ku Tokyo 104-8340 (JP)
(72) Inventor: TAKENAKA Taishi, Tokyo 104-8340 (JP); KAWASHIMA Takuto, Tokyo 104-8340 (JP)
(74) Representative: Marks & Clerk LLP
(86) International application number: PCT/JP2021/039892
(87) International publication number: WO 2022/230219

(57) **Abstract**

A pneumatic tire according to the present disclosure includes a sound absorber disposed on the tire inner surface. The sound absorber is a sponge material, and in a reference state, the sponge material is rectangular in a cross-section in the tire width direction, the ratio t/w of the thickness t of the sponge material to the width w of the sponge material in the tire width direction is from 0.4 to 0.55, the thickness t of the sponge material is 30 mm or less, the volume ratio of the sponge material is from 5% to 8%, the elongation at break of the sponge material is from 200% to 250%, and the hardness of the sponge material is from 80 N to 140 N.

## Description

### TECHNICAL FIELD

The present disclosure relates to a pneumatic tire.

### BACKGROUND

To reduce the resonant vibrations of air and gas generated in the inner cavity of a tire (cavity resonance), technology for arranging a sound absorber formed from a sponge material or the like on the inner surface of the tire is known. For example, see patent literature (PTL) 1. The sound absorber can convert the vibrational energy of the air and gas in the inner cavity of the tire into thermal energy and suppress cavity resonance in the inner cavity of the tire.

### CITATION LIST

### Patent Literature

PTL 1: JP 2005-254924 A

### SUMMARY

### (Technical Problem)

However, with the aforementioned technology, there is a risk of the sound absorber detaching from the tire inner surface. In such a case, the effect of sound absorption is lost prematurely.

To address this issue, the present disclosure aims to provide a pneumatic tire capable of suppressing detachment of the sound absorber from the tire inner surface.

### (Solution to Problem)

A summary of the present disclosure is as follows.
(1) A pneumatic tire comprising a sound absorber disposed on a tire inner surface, wherein
   the sound absorber is a sponge material, and
   in a reference state such that the pneumatic tire is mounted on an applicable rim, filled to a prescribed internal pressure, and under no load,
   the sponge material is rectangular in a cross-section in a tire width direction, a ratio t/w of a thickness t of the sponge material to a width w of the sponge material in the tire width direction is from 0.4 to 0.55, and the thickness t of the sponge material is 30 mm or less,
   a volume ratio of the sponge material is from 5% to 8%,
   an elongation at break of the sponge material is from 200% to 250%, and
   a hardness of the sponge material is from 80 N to 140 N.

Here, the "width w of the sponge material in the tire width direction" refers to the maximum width in the tire width direction in a case in which the width varies depending on the position, and the "thickness t of the sponge material" is measured in the tire radial direction and refers to the maximum thickness in a case in which the thickness varies depending on the position.

The "volume ratio of the sponge material" refers to the ratio of the volume of the sponge material to the total volume of the tire inner cavity. The "volume of the sponge material" referred to here, however, is the volume under normal temperature and pressure, with a tire 1 removed from the rim. The "total volume of the inner cavity of the tire" refers to the total volume when the tire 1 is mounted on an applicable rim and filled to the specified internal pressure.

The "elongation at break of the sponge material" refers to the value measured on a No. 1 dumbbell test piece in accordance with the method for measuring "tensile strength and elongation" prescribed in Section 10 of JIS K 6400, "Test Methods for Flexible Polyurethane Foam".

The "hardness of the sponge material" refers to the value measured in accordance with Method A (Section 6.3) among the "hardness" measurement methods prescribed in Section 6 of JIS K 6400, "Test Methods for Flexible Polyurethane Foam".

The "applicable rim" refers to a standard rim of an applicable size, such as the Measuring Rim in the STANDARDS MANUAL of the European Tyre and Rim Technological Organisation (ETRTO) in Europe or the Design Rim in the YEAR BOOK of the Tire and Rim Association, Inc. (TRA) in the USA, that is described, or will be described in the future, in industrial standards effective in the region where the tire is manufactured and used, such as the YEAR BOOK published by the Japan Automobile Tyre Manufacturers Association (JATMA) in Japan, the STANDARDS MANUAL of the ETRTO, and the YEAR BOOK of the TRA. (In other words, the "rim" encompasses not only current sizes but also sizes that may be included in industrial standards in the future. An example of the "size that will be described in the future" is the size described under "future developments" in the ETRTO Standards Manual 2013). In the case of a size not specified in the aforementioned industrial standards, the "rim" refers to a rim whose width corresponds to the bead width of the tire.

The "prescribed internal pressure" represents the air pressure (maximum air pressure) corresponding to the maximum load capability of a single wheel in an applicable size/ply rating described by the aforementioned JATMA or the like. In the case of a size not listed in the industrial standards, the "prescribed internal pressure" refers to the air pressure (maximum air pressure) corresponding to the maximum load capability prescribed for each vehicle on which the tire is mounted.

### (Advantageous Effect)

According to the present disclosure, a pneumatic tire capable of suppressing detachment of the sound absorber from the tire inner surface can be provided.

### BRIEF DESCRIPTION OF THE DRAWINGS

In the accompanying drawings:

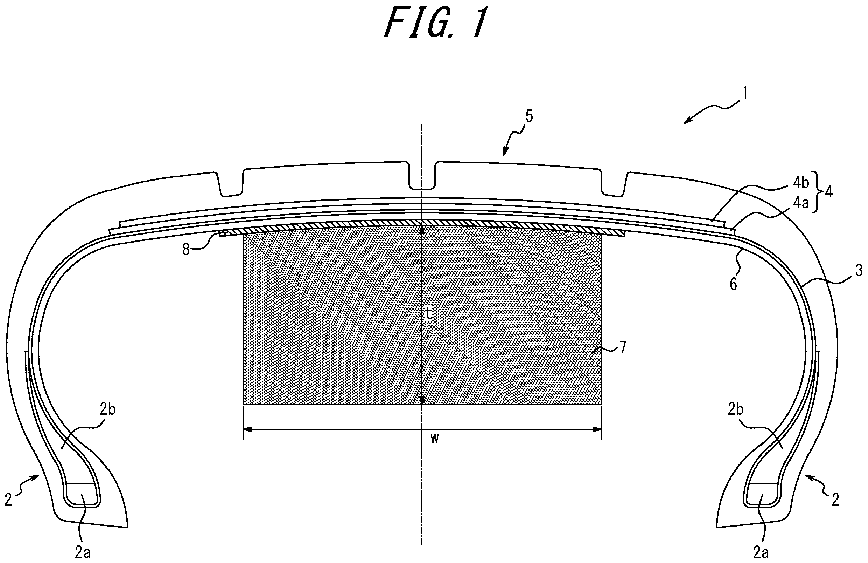

FIG. 1 is a cross-sectional view in the tire width direction of a pneumatic tire according to an embodiment of the present disclosure.

### DETAILED DESCRIPTION

Embodiments of the present disclosure are described below in detail with reference to the drawings.

FIG. 1 is a cross-sectional view in the tire width direction of a pneumatic tire according to an embodiment of the present disclosure. FIG. 1 illustrates a cross-sectional view in the tire width direction of the pneumatic tire (hereinafter also simply referred to as a tire) in a reference state such that the tire is mounted on an applicable rim, filled to a prescribed internal pressure, and under no load.

As illustrated in FIG. 1, the pneumatic tire 1 of the present embodiment (hereinafter referred to simply as "tire") includes a pair of bead portions 2, a pair of sidewall portions connected to the bead portions, and a tread portion 5 connected to the sidewall portions. The tire 1 is also provided with a belt 4 and tread rubber, in this order, on the tire radial outer side of the crown portion of the carcass 3, which toroidally straddles bead cores 2a embedded in the pair of bead portions 2.

As illustrated in FIG. 1, a bead filler 2b having a substantially triangular cross-section in the illustrated example is further provided on the tire radial outer side of the bead core 2a in the present embodiment. The configuration of the bead portions 2, however, is not particularly limited in the present disclosure, and any known cross-sectional shape, size, and material can be adopted for the bead cores 2a and bead fillers 2b. A configuration without the bead cores 2a or the bead fillers 2b can also be adopted.

In the present embodiment, the carcass 3 is configured by a single carcass ply made of organic fibers, but the number and material of the carcass plies that configure the carcass 3 are not limited.

In the present embodiment, the belt 4 is formed by two belt layers 4a, 4b in which cords (steel cords in the present example) cross between the layers, but the belt structure is not particularly limited in the present disclosure. Any configuration may be adopted for the material and the like of the cords, the number of cords implanted, the inclination angle, the number of belt layers, and the like.

The material and the like of the rubber in the tread portion 5 can also be of any known configuration.

As illustrated in FIG. 1, in the tire of the present embodiment, a sound absorber 7 is disposed on the tire inner surface 6 (the surface further inward than an inner liner, not depicted in the present example) in the tread portion 5 with an adhesion layer 8 therebetween. The adhesion layer 8 can be made of any known adhesive.

In the present embodiment, at least a portion (all in the illustrated example) of the sound absorber 7 in a region extending in the tire width direction is disposed inward from the tread portion 5 in the tire radial direction. In the illustrated example, the width of the adhesion layer 8 in the tire width direction is greater than the width of the sound absorber 7 in the tire width direction but can instead be the same or smaller.

In the present embodiment, the sound absorber 7 and the adhesion layer 8 are continuously provided in the tire circumferential direction on the circumference of the tire. The sound absorber 7 and adhesion layer 8 can, however, be provided intermittently in the tire circumferential direction on the circumference of the tire.

In the present embodiment, the sound absorber 7 is a sponge material. The sponge material can be a sponge-like porous structure including, for example, a sponge having continuous bubbles made of foamed rubber or synthetic resin. In addition to the above-described sponge, examples of the sponge material include a webbed material in which animal fibers, plant fibers, synthetic fibers, or the like are intertwined and integrally connected. The above-described "porous structure" is not limited to a structure with continuous bubbles but also includes a structure with discontinuous bubbles. The above-described sponge material converts, into thermal energy, the vibrational energy of the air vibrating in the voids formed on the surface and inside of the sponge material. This suppresses the cavity resonance in the inner cavity of the tire, thereby reducing road noise.

Examples of the sponge material include synthetic resin sponges such as an ether-based polyurethane sponge, ester-based polyurethane sponge, and polyethylene sponge, and rubber sponges such as a chloroprene rubber sponge (CR sponge), ethylene propylene diene rubber sponge (EPDM sponge), and nitrile rubber sponge (NBR sponge). In terms of sound absorption, weight reduction, adjustability of foaming, durability, and the like, sponges such as polyurethane sponges, including ether-based polyurethane sponges, or polyethylene sponges are preferably used.

The sound absorber 7 has a rectangular shape in a tire widthwise cross-sectional view. The dimensions and the like of the sound absorber 7 are as follows: the ratio t/w of the thickness t of the sponge material to the width w of the sponge material in the tire width direction is from 0.4 to 0.55, and the thickness t of the sponge material is 30 mm or less. The volume ratio of the sponge material is from 5% to 8%.

As for the physical properties and the like of the sound absorber 7, the elongation at break of the sponge material is from 200% to 250%, preferably from 210% to 240%. The hardness of the sponge material is from 80 N to 140 N, preferably from 90 N to 130 N.

As for the other physical properties and the like of the sound absorber 7, the specific gravity of the sponge material is preferably from 0.001 to 0.090. The reason is that the sound absorption can be improved by the specific gravity of the sponge material being 0.001 or more, whereas an increase in weight due to the sponge material can be suppressed by the specific gravity of the sponge material being 0.090 or less. For the same reasons, the specific gravity of the sponge material is more preferably between 0.003 and 0.080. Here, the "specific gravity" is the value obtained by converting the apparent density into specific gravity in accordance with the measurement method in Section 5 of JIS K 6400.

The tensile strength of the sponge material is preferably from 20 kPa to 500 kPa. The reason is that the adhesiveness can be improved by the tensile strength of the sponge material being 20 kPa or more, whereas the productivity of the sponge material can be improved by the tensile strength of the sponge material being 500 kPa or less. For the same reasons, the tensile strength of the sponge material is more preferably from 40 kPa to 400 kPa. Here, the "tensile strength" is defined as the value measured with a No. 1 dumbbell test piece in accordance with the measurement method in Section 10 of JIS K 6400.

The tearing strength of the sponge material is preferably from 1 N/cm to 130 N/cm. The reason is that cracks can be prevented from forming in the sponge material by the tearing strength being 1 N/cm or more, whereas the manufacturability of the sponge material can be improved by the tearing strength being 130 N/cm or less. For the same reasons, the tearing strength of the sponge material is more preferably from 3 N/cm to 115 N/cm. Here, the "tearing strength" is defined as the value measured with a No. 1 test piece in accordance with the measurement method in Section 11 of JIS K 6400.

The foaming ratio of the sponge material is preferably between 1% and 40%. The reason is that the sound absorption can be improved by the foaming ratio of the sponge material being 1% or more, whereas the productivity of the sponge material can be improved by the foaming ratio of the sponge material being 40% or less. For the same reasons, the foaming ratio of the sponge material is more preferably between 2% and 25%. Here, the "foaming ratio" refers to the value yielded by subtracting 1 from the ratio A/B of the specific gravity A of the solid phase portion of the sponge material to the specific gravity B of the sponge material and then multiplying by 100.

The overall mass of the sponge material is preferably between 5 g and 800 g. The reason is that the sound absorption can be reduced by the mass being 5 g or more, whereas an increase in weight due to the sponge material can be suppressed by the mass being 800 g or less. For the same reasons, the mass of the sponge material is preferably between 20 g and 600 g.

The effects of the pneumatic tire according to the present embodiment are described below.

First, in the present embodiment, the sound absorber 7 is disposed on the tire inner surface 6 (with the adhesion layer 8 therebetween in the present example). The sound absorption properties of the tire 1 are therefore enhanced, and the adhesion layer 8 also suppresses detachment of the sound absorber 7 from the tire inner surface 6.

Also, in the tire 1 of the present embodiment, the sponge material has a rectangular cross-section, the ratio t/w of the thickness t of the sponge material to the width w of the sponge material in the tire width direction is from 0.4 to 0.55, the thickness t of the sponge material is 30 mm or less, and the volume ratio of the sponge material is from 5% to 8%. Therefore, while more effective sound absorption properties are obtained for the tire, an increase in tire weight can be suppressed, and the detachment of the sound absorber 7 from the tire inner surface 6 can be suppressed. In other words, the rectangular shape ensures a large adhesion area with the tire inner surface 6 at the upper edge (of the rectangle) to further suppress detachment of the sound absorber 7 from the tire inner surface 6. The sound absorption effect cannot be fully achieved if the ratio t/w is less than 0.4 (if the thickness is reduced relative to the width so that the volume relative to the width decreases). Conversely, if the ratio t/w is more than 0.55 (if the width is reduced relative to the thickness), the adhesion area with the tire inner surface 6 becomes smaller, and detachment of the sound absorber 7 from the tire inner surface 6 cannot be sufficiently suppressed. A value of more than 30 mm for the thickness t of the sponge material will lead to an increase in tire weight. Furthermore, if the volume ratio of the sponge material is less than 5%, the sound absorption effect cannot be sufficiently achieved, whereas a value of more than 8% for the volume ratio of the sponge material will lead to an increase in weight.

By the elongation at break of the sponge material being from 200% to 250%, detachment of the sound absorber 7 from the tire inner surface 6 can be further suppressed. That is, if the elongation at break of the sponge material is less than 200%, the sponge material does not elongate easily and tends to peel off at the interface with the tire inner surface 6 (or the adhesion layer 8). Detachment of the sound absorber 7 from the tire inner surface 6 thus cannot be sufficiently suppressed. A value of over 200% for the elongation at break of the sponge material reduces productivity.

By the hardness of the sponge material being from 80 N to 140 N, the sound absorption properties are improved, and the detachment of the sound absorber 7 from the tire inner surface 6 can be suppressed. That is, if the hardness of the sponge material is less than 80 N, the sound absorption effect cannot be sufficiently achieved, whereas if the hardness of the sponge material is more than 140 N, the adhesiveness between the sponge material and the tire inner surface 6 (or the adhesion layer 8) cannot be sufficiently achieved. Detachment of the sound absorber 7 from the tire inner surface 6 thus cannot be sufficiently suppressed.

As described above, the pneumatic tire of the present embodiment is capable of suppressing detachment of the sound absorber from the tire inner surface. An increase in tire weight can also be suppressed, and the sound absorption properties of the tire can be achieved more effectively.

In order to obtain a sponge material as described above, such that the hardness is 80 N or more, yet the elongation at break is 200% or more, a polyurethane material is preferably used, such as an ether-based polyurethane sponge, an ester-based polyurethane sponge, or the like.

The elongation at break of the sponge material is preferably from 210% to 240%. The reason is that a value of 210% or more for the elongation at break of the sponge material can further suppress detachment of the sound absorber 7 from the tire inner surface 6, whereas a value of 240% or less for the elongation at break of the sponge material can further ensure productivity.

The hardness of the sponge material is preferably from 90 N to 130 N. The reason is that a value of 90 N or more for the hardness of the sponge material can further enhance the sound absorption effect, whereas a value of 130 N or less for the hardness of the sponge material can further suppress detachment of the sound absorber 7 from the tire inner surface 6.

In the above example, the adhesion layer is formed by a single layer of adhesive, but instead, a configuration such that nonwoven fabric is sandwiched between two adhesion layers may be used. The reason is that since the elongation at break of the sponge material in the present embodiment is 200% or more, detachment is sufficiently difficult with the above configuration even when a nonwoven fabric with a small elongation at break is used.

While embodiments of the present disclosure have been described above, the present disclosure is in no way limited to the above embodiments. For example, in the example illustrated in FIG. 1, the tire widthwise edges of the sound absorber 7 contact the tire inner surface 6 (the adhesion layer 8 in the illustrated example) inward in the tire width direction from the belt edges (the tire widthwise edges of one belt layer, or the tire widthwise edges of the belt layer having the maximum width among two or more belt layers). The tire widthwise edges of the sound absorber may, however, be in contact with the tire inner surface (adhesion layer) outward in the tire width direction from the belt edges. Various other modifications are possible.

### EXAMPLES

Examples of the present disclosure are described below, but the present disclosure is in no way limited to these Examples. To verify the effectiveness of the present disclosure, samples according to an Example and Comparative Examples 1 and 2 were prototyped, and a test to evaluate the detachment of the sponge material from the tire inner surface was conducted. The evaluation was conducted by fixing the edges of the sponge material (where detachment is most likely to occur) in a vise and measuring the force that led to detachment. It was also confirmed whether the detachment occurred in the form of a tear in the sponge (defect) or some other form. The specifications of each sample and the evaluation results are listed in Table 1.

**[Table 1]**

| | Comparative Example 1 | Comparative Example 2 | Example |
|---|---|---|---|
| Sponge shape | rectangular cross-section | rectangular cross-section | rectangular cross-section |
| Sponge material | unknown | ether-based polyurethane | ether-based polyurethane |
| Ratio t/w | 0.25 | 0.21 | 0.48 |
| Thickness t (mm) | 20 | 30 | 30 |
| Sponge elongation at break (%) | 160 | 155 | 229 |
| Sponge hardness (N) | 78 | 95 | 110 |
| Form of detachment | tear in sponge material and other form | tear in sponge material | tear in sponge material and other form |
| Detachment strength (N) | 103 | 165 | 193 |

### REFERENCE SIGNS LIST

- 1: Pneumatic tire
- 2: Bead portion
- 2a: Bead core
- 2b: Bead filler
- 3: Carcass
- 4: Belt
- 5: Tread portion
- 6: Tire inner surface
- 7: Sound absorber
- 8: Adhesion layer

## Claims

1. A pneumatic tire comprising a sound absorber disposed on a tire inner surface, wherein
the sound absorber is a sponge material, and
in a reference state such that the pneumatic tire is mounted on an applicable rim, filled to a prescribed internal pressure, and under no load,
the sponge material is rectangular in a cross-section in a tire width direction, a ratio t/w of a thickness t of the sponge material to a width w of the sponge material in the tire width direction is from 0.4 to 0.55, and the thickness t of the sponge material is 30 mm or less,
a volume ratio of the sponge material is from 5% to 8%,
an elongation at break of the sponge material is from 200% to 250%, and
a hardness of the sponge material is from 80 N to 140 N.

2. The pneumatic tire according to claim 1, wherein the elongation at break of the sponge material is from 210% to 240%.

3. The pneumatic tire according to claim 1 or 2, wherein the hardness of the sponge material is from 90 N to 130 N.
